# EUROPEAN PATENT APPLICATION

(11) **EP 2 634 620 A1**
(43) Date of publication of application: **04.09.2013**
(21) Application number: 11836117.9
(22) Date of filing: 20.10.2011
(51) Int. Cl.: G02F 1/167, G02F 1/17

(54) **ELECTROPHORETIC DISPLAY DEVICE**

(30) Priority: 15.12.2010 JP 2010278846; 27.10.2010 JP 2010240711
(71) Applicant: Sakura Color Products Corporation, Osaka-shi, Osaka 537-0025 (JP)
(72) Inventor: INOUE, Hiroshi, Osaka-shi Osaka 540-8508 (JP); YOSHITSUGI, Tomochika, Osaka-shi Osaka 540-8508 (JP)
(74) Representative: Manley, Nicholas Michael
(86) International application number: PCT/JP2011/074121
(87) International publication number: WO 2012/056981

(57) **Abstract**

Provided is an electrophoretic display device that can display high-precision color images.

The electrophoretic display device comprises a plurality of display units each displaying a single pixel, first electrodes, and second electrodes; the display units being arranged in a matrix form and each having at least three-layered cells that contain charged particles, each of the first electrodes being provided on the upper or lower surface of each cell, each of the second electrodes being provided on the side edge of each cell, and the charged particles being colored with different colors for every cell in each display unit.

## Description

### Technical Field

The present invention relates to an electrophoretic display device.

### Background Art

In recent years, the electrophoretic display device (so-called "electronic paper"), which employs the electrophoresis of charged particles, has been attracting attention as the most promising technology for a next-generation display device. As such an electrophoretic display device, for example, one that displays full-color images using microencapsulated charged particles is widely known, as proposed in Patent Document 1. This electrophoretic display device has a plurality of microcapsules provided with electrodes on the front and back sides. Each microcapsule is filled with positively charged white particles and negatively charged colored particles (e.g., cyan, magenta, or yellow). In this device, when a voltage is applied to the electrodes so that the electrode on the front side of the microcapsule is negative, and the electrode on the back side is positive, the white charged particles move to the front side of the microcapsule, while the colored charged particles move to the back side of the microcapsule. Accordingly, the screen displays white. Conversely, when a voltage is applied to the electrodes so that the front electrode of the microcapsule is positive and the back electrode is negative, the colored charged particles move to the front side of the microcapsule, while the white charged particles move to the back side. Accordingly, the screen displays the color of the colored charged particles.

### Citation List

### Patent Literature

PTL 1: JP2005-241784A

### Summary of Invention

### Technical Problem

According to the above-mentioned electrophoretic display device, for example, when blue is displayed in a certain range of the screen, the colored charged particles in microcapsules filled with cyan-colored charged particles are moved to the front side, while the white charged particles in other microcapsules are moved to the front side, in this range. More specifically, in microcapsules filled with colored charged particles other than cyan, the colored charged particles are not used for color display. Since blue and white are present in combination in the screen, the color of the image is light. Thus, the electrophoretic display device had a problem in that it could not display high-precision color images.

Therefore, an object of the present invention is to provide an electrophoretic display device that can display high-precision color images.

### Solution to Problem

The electrophoretic display device of the present invention was made to solve the above problem. The electrophoretic display device comprises a plurality of display units each displaying a single pixel, first electrodes, and second electrodes; the display units being arranged in a matrix form and each having at least three-layered cells that contain charged particles, each of the first electrodes being provided on the upper or lower surface of each cell, each of the second electrodes being provided on the side edge of each cell, and the charged particles being colored with different colors for every cell in each display unit.

In the electrophoretic display device, the display units are each provided for a single pixel, and each display unit has at least three-layered cells. Since each of the cells contains charged particles that are colored with different colors, one pixel can display various colors by applying a voltage to the first and second electrodes. No useless pixels are present in the image range, and a high-precision color image can be displayed. In the present invention, the "different colors for each cell" are not limited; for example, cyan, magenta and yellow, or red, green, and blue, can be used. In the present invention, the "side edge of the cell" refers to the upper peripheral edge, lower peripheral edge, and side of the cell.

In the electrophoretic display device, it is preferable that one of the first and second electrodes is provided in the outside of the cell while the other is provided in the inside of the cell. According to this structure, the first electrode and the second electrode are separated by the cell. Therefore, for example, even when the cell is deformed by pressing the display unit with a finger, a stylus pen, or the like, the first electrode and the second electrode are not brought into contact with each other. Consequently, the occurrence of short circuiting between the first electrode and the second electrode can be prevented.

In the electrophoretic display device, both the first and second electrodes may be provided in the outside of the cell, and the second electrode may be located on the side of the cell. According to this structure, even when the cell is deformed internally in a radial direction, at least the side wall of the cell present between the first electrode and the second electrode blocks the contact between the first electrode and the second electrode. Consequently, the occurrence of short circuiting between the first electrode and the second electrode can be prevented.

In the electrophoretic display device, the second electrode can be provided around the entire side edge of each cell. According to this structure, charged particles that are not used for pixel color display can be reliably collected on the side of the cell. Therefore, a more high-precision color image can be displayed.

The electrophoretic display device may further comprise shield means for shielding the charged particles collected in the second electrode, and each shield means covers the upper peripheral edge of each display unit. According to this structure, charged particles that are not used for pixel color display can be reliably invisible. Therefore, a higher-precision color image can be displayed.

The electrophoretic display device may further comprise reflectors for reflecting light passing through the cells, and each reflector may be provided below each display unit.

In the electrophoretic display device, the charged particles may be negatively charged electret particles made of a material containing fluorine. According to this structure, the charged particles can be electrophoresed regularly and quickly.

### Advantageous Effects of Invention

The present invention can display high-precision color images.

### Brief Description of Drawings

Fig. 1 is a front cross-sectional schematic view of an electrophoretic display device according to one embodiment of the present invention.
Fig. 2 is a perspective view showing the movement of charged particles in the electrophoretic display device according to one embodiment of the present invention.
Fig. 3 is a front cross-sectional schematic view showing the action of the electrophoretic display device according to one embodiment of the present invention.
Fig. 4 is a front cross-sectional schematic view of cells in an electrophoretic display device according to a modified example of the above embodiment.
Fig. 5 is a front cross-sectional schematic view of an electrophoretic display device according to a modified example of the above embodiment.
Fig. 6 is a front cross-sectional schematic view of cells in an electrophoretic display device according to a modified example of the above embodiment.
Fig. 7 is a front cross-sectional schematic view of an electrophoretic display device according to a modified example of the above embodiment.
Fig. 8 is a front cross-sectional schematic view of cells in an electrophoretic display device according to a modified example of the above embodiment.

### Description of Embodiments

An embodiment of the electrophoretic display device according to the present invention is described below with reference to the drawings.

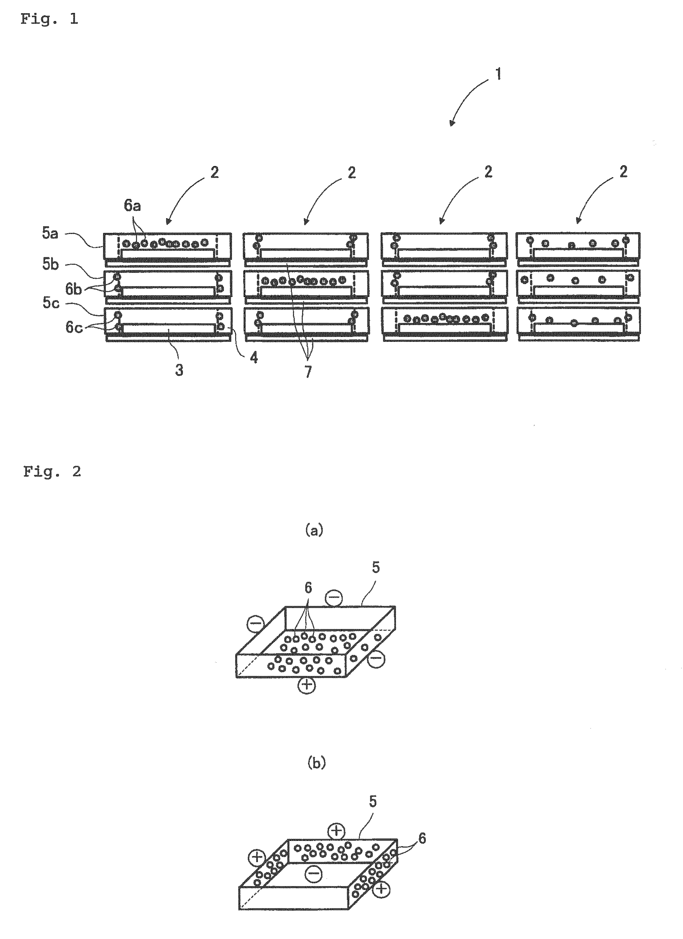

As shown in Fig. 1, the electrophoretic display device 1 according to this embodiment comprises a plurality of display units 2. Each display unit 2 has first to third cells 5a to 5c, and each of the cells is provided with a first electrode 3 and a second electrode 4 therein.

The display units 2 are each provided for a single pixel forming an image, and each comprises first to third cells 5a to 5c that are laminated in the height direction, as shown in Fig. 1. The first to third cells 5a to 5c are made of glass or a transparent synthetic resin, such as polyethylene terephthalate, so that light can pass through them. The bottom of each cell is provided with a base 7 for supporting the first electrode 3 and the second electrode 4, described later. The material of the base 7 is, for example, glass or a transparent synthetic resin, such as polyethylene terephthalate, but is not limited insofar as it is a resin or metal that can support the first electrode 3 and the second electrode 4. Further, a reflector for reflecting light passing through the display unit 2, or a white board or black board that serves as the background color of an image may be provided below the third cell 5c. In addition, a shield means may be provided on the upper peripheral edge of the first cell 5a so as to shield first to third charged particles 6a to 6c, described later, that are collected in the second electrode 4. The shield means can be formed by, for example, placing a chromium metal film, a chromium oxide film, a black matrix produced by a material that satisfies light-blocking properties, corrosion resistance, etc., or a colored resin on the upper peripheral edge of the first cell 5a; or by directly coloring the upper peripheral edge of the first cell 5a with a color (e.g., black) that can shield the first to third charged particles 6a to 6c. The area of the shield means is not limited, but is preferably 0.5 to 40% based on the area of the upper surface of the first cell 5a.

The inside of each of the first to third cells 5a to 5c is provided with, as shown in Fig. 1, the first electrode 3 and the second electrode 4 for collecting the first to third charged particles 6a to 6c, described later. The second electrode 4 is provided around the entire circumference of the inner side of each of the first to third cells 5a to 5c. The first electrode 3 is located on the bottom of each of the first to third cells 5a to 5c on the inner side of the second electrode 4 so that short circuiting between the first electrode 3 and the second electrode 4 is prevented. The first electrode 3 can have various forms, such as a plate, stripes, a lattice, or dots. The material of the first electrode 3 and the second electrode 4 is not limited. For example, a highly conductive metal, such as copper or silver, a transparent conductive resin, an ITO (indium tin oxide) film, or the like can be used.

Moreover, as shown in Fig. 1, the first cell 5a contains the first charged particles 6a, which are colored cyan, the second cell 5b contains the second charged particles 6b, which are colored magenta, and the third cell 5c contains the third charged particles 6c, which are colored yellow. Further, each of the first to third cells 5a to 5c is filled with an electrophoretic medium for electrophoresing the first to third charged particles 6a to 6c. Examples of the electrophoretic medium include air and liquid media, such as ethylene glycol (EG), propylene glycol (PG), glycerin, dimethyl silicone oil and other silicone oils, perfluoropolyether oil and other fluorine-containing oils, and petroleum oils. Silicone oils are particularly preferred among the liquid media.

The first to third charged particles 6a to 6c are negatively charged electret particles made of a material containing fluorine. The mean particle diameter of the first to third charged particles 6a to 6c is not limited; however, for small-sized displays, the mean particle diameter is 0.01 to 20 µm, whereas for large-sized displays, the mean particle diameter is generally 0.5 to 3 mm, and preferably 1 to 2 mm.

The first to third charged particles 6a to 6c for small-sized displays are produced by, for example, emulsifying a fluorine-containing (non-polymerizable) compound or fluorine-containing polymerizable compound having a liquid phase under atmospheric or elevated pressure in a liquid that is incompatible with these compounds, to produce emulsified particles, and irradiating the emulsified particles, which are either in the form of a suspension or redispersed in an electrophoretic medium, with an electron ray or a radial ray. The conditions of irradiation with an electron ray or a radial ray are not limited insofar as the particles are properly processed into electret particles. For example, the irradiation may be carried out by emitting an electron ray of about 10 to 50 kGy using an electron linear accelerator. Radial ray irradiation may be performed, for example, by emitting a gamma ray of about 1 to 15 kGy. Suitable examples of the fluorine-containing compound or fluorine-containing polymerizable compound having a liquid phase under elevated pressure are those having a liquid phase at a temperature of about 0°C to 100°C and a pressure of 5 to 30 bar. When such a compound is used, the emulsified particles of the compound are produced in conditions under which the compound is in the liquid phase. When the fluorine-containing polymerizable compound is used, the emulsified particles of the compound are cured with heat, ultraviolet irradiation, or the like. When curing with heat, for example, the emulsified particles are heated at about 80°C for about an hour. When curing with ultraviolet irradiation, the emulsified particles undergo 1 to 2 J/cm² ultraviolet irradiation having a wavelength of 365 nm.

Examples of the fluorine-containing compound include various known fluorine-containing resins, fluorine-containing oils, fluorine-containing adhesives, and the like. Examples of fluorine-containing resins include tetrafluoroethylene resin and the like, such as polytetrafluoroethylene (PTFE) represented by FR₁C = R₁R₂, wherein R₁ = F or H, R₂ = F, H, Cl, or other arbitrary elements. Examples of fluorine-containing oils include perfluoropolyether oil, chlorotrifluoroethylene oligomer, and the like, such as perfluoropolyether oil (product name: "DEMNUM," Daikin Industries, Ltd.) and chlorotrifluoroethylene oligomer (product name: "DAIFLOIL," Daikin Industries, Ltd.). Examples of fluorine-containing adhesives include ultraviolet-curable fluorinated epoxy adhesives, and the like, such as "OPTODYNE" (product name: Daikin Industries, Ltd.).

Examples of the fluorine-containing polymerizable compound include various known fluorine-containing elastomers, fluorine-containing varnishes, polymerizable fluorocarbon resins, and the like. Examples of fluorine-containing elastomers used as the fluorine-containing polymerizable compound include straight-chain fluoropolyether compounds, such as "SIFEL3590-N," "SIFEL2610," and "SIFEL8470" (all are products of Shin-Etsu Chemical Co., Ltd.). Examples of fluorine-containing varnishes include tetrafluoride ethylene/vinyl monomer copolymer (product name: "Zeffle," Daikin Industries, Ltd.) and the like. Examples of polymerizable fluorocarbon resins include polymerizable amorphous fluorocarbon resin (product name: "CYTOP," Asahi Glass Co., Ltd.), and the like.

The liquid that is incompatible with the fluorine-containing compound and fluorine-containing polymerizable compound is not limited. Examples thereof include water, ethylene glycol (EG), propylene glycol (PG), glycerin, and silicone oil. A suitable liquid is selected from these liquids depending on the fluorine-containing compound or fluorine-containing polymerizable compound to be used. Further, a so-called electrophoretic medium may be used as the liquid that is incompatible with the fluorine-containing compound and fluorine-containing polymerizable compound. Examples of the electrophoretic medium include ethylene glycol (EG), propylene glycol (PG), glycerin, dimethyl silicone oil and other silicone oils, perfluoropolyether oil and other fluorine-containing oils, and petroleum oils.

Examples of the emulsifier for emulsification include polyvinyl alcohol and ethylene maleic anhydride. The content of the emulsifier in the liquid that is incompatible with the fluorine-containing compound and fluorine-containing polymerizable compound is preferably about 1 to 10 wt%. Emulsified particles may be prepared by placing those components into a known mixing device, such as a stirrer, mixer, homogenizer, or the like, and evenly mixing them. In this case, mixing is preferably performed under heat.

The first to third charged particles 6a to 6c for larger-sized displays are produced, for example, by irradiating a fluorine-containing resin sheet with an electron ray or a radial ray to convert the sheet into an electret sheet, and grinding the electret sheet by a known plastic film-grinding machine or the like. The conditions of irradiation with an electron ray or a radial ray are not limited insofar as the fluorine-containing resin sheet is processed into an electret sheet; however, irradiation is preferably carried out by applying an electron ray or a radial ray simultaneously and uniformly to the entire sheet from a perpendicular direction. The irradiation with an electron ray or a radial ray may be performed, for example, by emitting an electron ray of about 10 to 2,000 kGy or a gamma ray of about 1 to 15 kGy using an electron linear accelerator.

The fluorine-containing resin sheet is not limited insofar as it functions as an electron trap. Examples thereof include a tetrafluoroethylene-hexafluoropropylene copolymer sheet (FEP), a tetrafluoroethylene-perfluoroalkyl vinyl ether copolymer sheet (PFA), a polytetrafluoroethylene sheet (PTFE), a tetrafluoroethylene-ethylene copolymer sheet (ETFE), a polyvinylidene fluoride sheet (PVDF), a polychlorotrifluoroethylene sheet (PCTFE), a chlorotrifluoroethylene-ethylene copolymer sheet (ECTFE), and the like. Among these fluorine-containing resin sheets, at least one of the FEP sheet, PFA sheet, and PTFE sheet is particularly preferred.

The above-described fluorine-containing compound, fluorine-containing polymerizable compound, and fluorine-containing resin sheet contain a pigment in advance. The pigment is not limited. Examples thereof include azo pigments, such as β-naphthol-based pigments, naphthol AS-based pigments, acetoacetic acid-based pigments, aryl amide-based pigments, pyrazolone-based pigments, acetoacetic acid arylamide-based pigments, β-oxynaphthoic acid-based pigments (BON acid-based pigments), acetoacetic acid allylide-based pigments, and the like. Other examples include polycyclic pigments, such as phthalocyanine-based pigments, anthraquinone-based (threne) pigments, perylene-based or perinone-based pigments, indigo-based or thioindigo-based pigments, quinacridone-based pigments, dioxazine-based pigments, isoindolinone-based pigments, quinophthalone-based pigments, metal complex pigments, methine-based or azo methine-based pigments, diketopyrrolopyrrole-based pigments, and the like. Still other examples include azine pigments, daylight fluorescent pigments (resin dye solid solutions), hollow resin pigments, nitroso pigments, nitro pigments, natural pigments, and the like. The pigment may be selected from commercial products, such as Symuler Fast Yellow 4GO, Fasdtogen Super Magenta RG, Fasdtogen Blue TGR (DIC Corporation), Fuji Fast Red 7R3300E, Fuji Fast Carmine 527 (Fuji Shikiso K.K.), and the like. The pigment particle diameter is preferably about 0.02 to 20 µm, and more preferably about 0.02 to 3 µm.

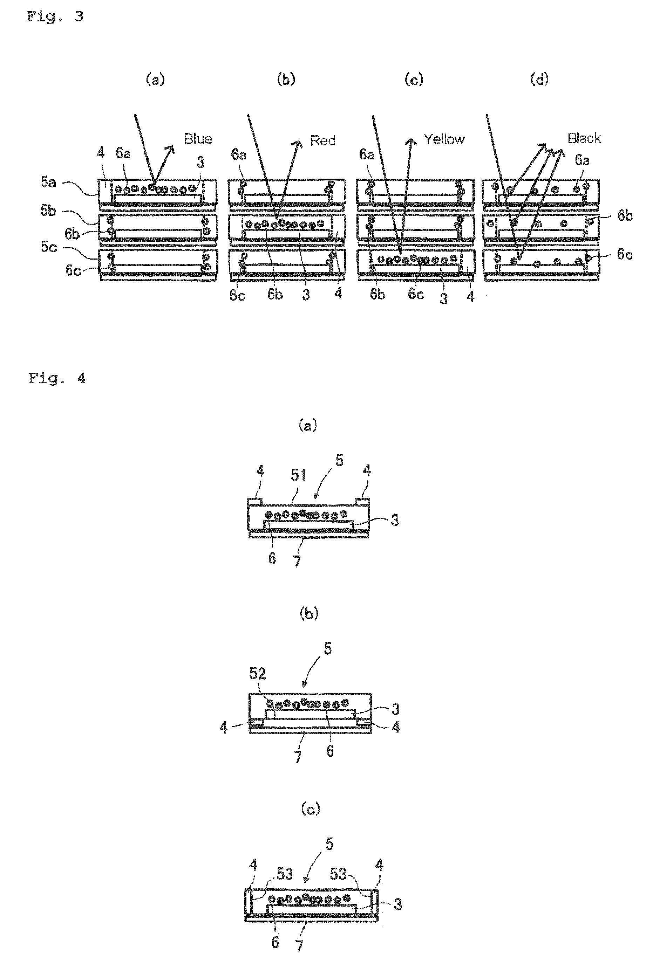

Next, the operation of the above-mentioned electrophoretic display device 1 is described with reference also to Figs. 2 and 3. In Fig. 2, first to third cells 5a to 5c are collectively expressed as a "cell 5," and first to third charged particles are collectively expressed as "charged particles 6."

When the electrophoretic display device 1 is to display blue in a certain pixel, voltages are applied to the first electrode 3 and the second electrode 4 so that the first electrode 3 is positive while the second electrode 4 is negative in the first cell 5a, which contains the cyan-colored first charged particles 6a. As a result, the first charged particles 6a are attracted to the first electrode 3 and located on the bottom of the first cell 5a (Fig. 2 (a)). Conversely, when voltages are applied to the first electrode 3 and the second electrode 4 so that the first electrode 3 is negative while the second electrode 4 is positive in the second and third cells 5a and 5b, the second and third charged particles 6b and 6c are attracted to the second electrode 4 and located on the inner side of the second and third cells 5a and 5b (Fig. 2 (b)). When the display unit 2 in this condition is observed from above, only the color of the first charged particles 6a (cyan) is perceived. The colors of the second charged particles 6b (magenta) and third charged particles 6c (yellow) cannot be perceived because these particles are hidden behind the second and third cells 5b and 5c, the second electrode 4, or the shield means. Thus, the pixel displays blue (Fig. 3 (a)).

Moreover, in order to display red in a certain pixel, the first electrode 3 is made positive while the second electrode 4 is made negative in the second cell 5b, so that the second charged particles 6b are moved to the bottom of the second cell 5b (Fig. 2 (a)). In the first and third cells 5a and 5c, the first electrode 3 is made negative while the second electrode 4 is made positive, so that the first and third charged particles 6a and 6c are moved to the inner side of the first and third cells 5a and 5c (Fig. 2 (b)). When the display unit 2 in this condition is observed from above, only the color of the second charged particles 6b (magenta) is perceived. The colors of the first charged particles 6a (cyan) and third charged particles 6c (yellow) cannot be perceived because these particles are hidden behind the first and third cells 5a and 5c, the second electrode 4, or the shield means. Thus, the pixel displays red (Fig. 3 (b)).

Similarly, in order to display yellow in a certain pixel, the first electrode 3 is made positive while the second electrode 4 is made negative in the third cell 5c, so that the third charged particles 6c are moved to the bottom of the third cell 5c (Fig. 2 (a)). In the first and second cells 5a and 5b, the first electrode 3 is made negative while the second electrode 4 is made positive, so that the first and second charged particles 6a and 6b are moved to the inner side of the first and second cells 5a and 5b (Fig. 2 (b)). When the display unit 2 in this condition is observed from above, only the color of the third charged particles 6c (yellow) is perceived. The colors of the first charged particles 6a (cyan) and second charged particles 6b (magenta) cannot be perceived because these particles are hidden behind the first and second cells 5a and 5b, the second electrode 4, or the shield means. Thus, the pixel displays yellow (Fig. 3 (c)).

In addition, in order to display black in a certain pixel, the values of the voltage to be applied to the first electrode 3 and the second electrode 4 are adjusted so that the first to third charged particles 6a to 6c are dispersed in the first to third cells 5a to 5c (Fig. 3 (d)). When the display unit 2 in this condition is observed from above, the colors of the first to third charged particles 6a to 6c are seen in a mixture. Thus, the pixel color is black.

As described above, in the electrophoretic display device 1 of this embodiment, the individual display units 2 each corresponding to a single pixel comprise the first to third cells 5a to 5c, which are laminated. The movement of the first to third charged particles 6a to 6c in the first to third cells 5a to 5c allows one pixel to display various colors. Therefore, useless pixels that do not contribute to image display are not present in the image range. Consequently, a high-precision color image can be displayed.

An embodiment of the present invention is described above; however, the present invention is not limited thereto, and various modifications can be made without deviating from the scope of the present invention. For example, the form of the first to third cells 5a to 5c is not limited to a rectangular shape, and they can be formed into various shapes, such as a circular cylindrical shape or a polygonal cylindrical shape.

In the above embodiment, the display unit 2 comprises three-layered cells, but may have at least three-layered cells. When the display unit comprises cells of four or more layers, a cell that contains charged particles colored with a color (e.g., white, black, or neutral) other than cyan, magenta, and yellow can be provided.

In the above embodiment, the display unit 2 has a structure in which the first cell 5a containing the first charged particles 6a (cyan), the second cell 5b containing the second charged particles 6b (magenta), and the third cell 5c containing the third charged particles (yellow) are laminated in this order; however, the order of lamination of these cells can be changed.

In the above embodiment, the first to third charged particles 6a to 6c are colored cyan, magenta, and yellow, respectively; however, the colors of the charged particles can be suitably selected. For example, the charged particles may be colored red, green, and blue.

In the above embodiment, the first to third charged particles 6a to 6c are negatively charged electret particles, but are not limited thereto insofar as the particles can be electrophoresed in the cells. The particles may be positively charged, or may not have electret properties.

In the above embodiment, the second electrode 4 is provided around the entire inner side of each cell; however, it is sufficient that the charged particles be collected on the side of the cell. For example, the second electrode 4 may be provided only on one side of the cell.

In the above embodiment, the first electrode 3 and the second electrode 4 are provided on each cell; however, it is sufficient that the charged particles in the cell be collected on the bottom or side of the cell. As shown in Figs. 4 to 8, at least one of the first and second electrodes can be provided on the outside of the cell.

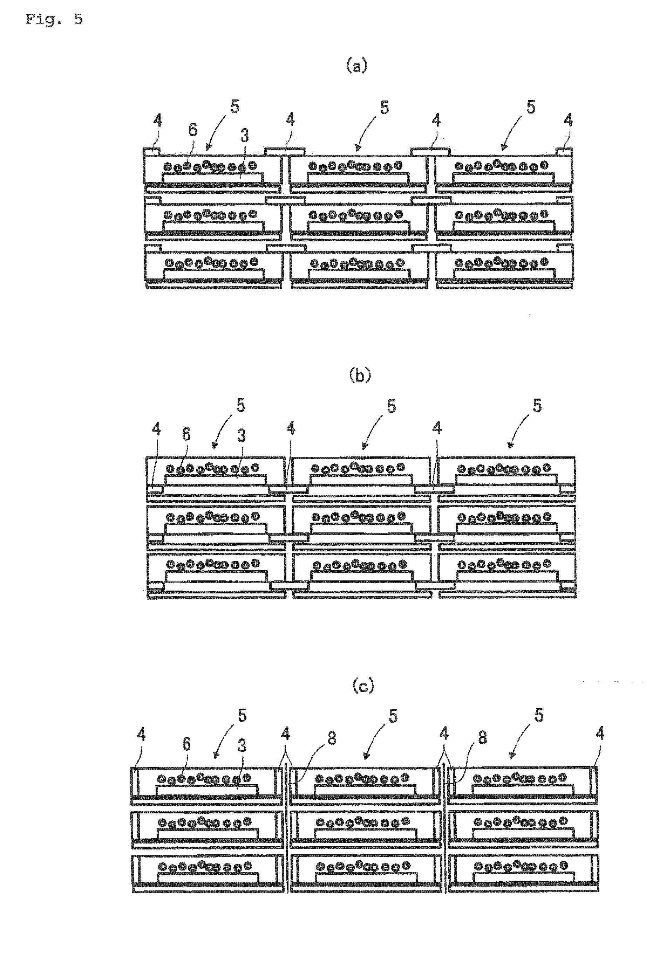

As shown in Figs. 4 (a) and 4 (b), when the first electrode 3 is provided on the inside of the bottom of the cell 5, the second electrode 4 can be provided on the upper or lower side edge outside of the cell 5. In addition, as shown in Figs. 5 (a) and 5 (b), the second electrode 4 may be formed integrally between adjacent cells 5. The first electrode 3 and the second electrode 4 are thereby separated by the ceiling 51 or bottom 52 of the cell 5. Accordingly, for example, even when the cell 5 is deformed by pressing the display unit of the electrophoretic display device with a finger, a stylus pen, or the like, the first electrode 3 and the second electrode 4 are not brought into contact with each other, and the occurrence of short circuiting can be prevented.

As shown in Fig. 4 (c), the first electrode 3 may be provided on the inside of the bottom of the cell 5, while the second electrode 4 may be provided on the outer side of the cell 5. The side wall 53 of the cell 5 is thereby present between the first electrode 3 and the second electrode 4. This can prevent short circuiting between the first electrode 3 and the second electrode 4. In this case, however, a partition 8 is preferably provided between the adjacent cells 5, as shown in Fig. 5 (c), so that the second electrodes 4 in the adjacent cells 5 are prevented from being in contact with each other. The material of the partition 8 is not limited. Examples thereof include thermosetting resins, such as phenol, epoxy, melamine, urea, and polyurethane; and insulators, such as polyethylene, polypropylene, acrylic resin, and other general-purpose plastics. In Figs. 4 and 5, the first electrode 3 is provided on the bottom of the cell 5, but may be provided on the top of the cell 5.

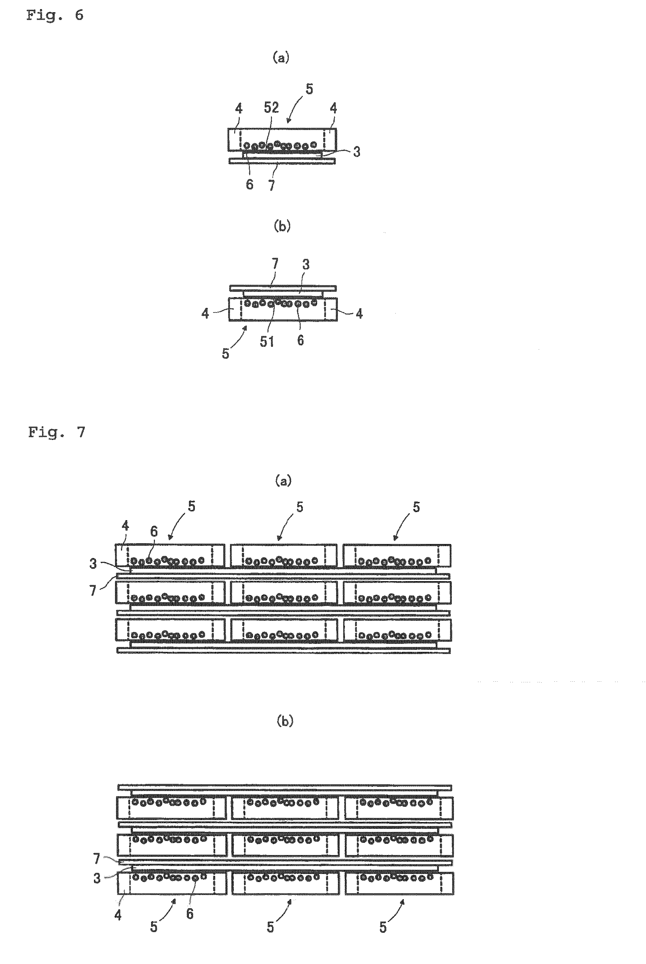

As shown in Figs. 6 (a) and 6 (b), when the second electrode 4 is provided on the inner side of the cell 5, the first electrode 3 can be provided on the outside upper or lower surface of the cell 5. In this case, the first electrode 3 may be formed integrally in a plurality of cells 5, as shown in Figs. 7 (a) and 7 (b). The ceiling 51 or bottom 52 of the cell 5 is thereby present between the first electrode 3 and the second electrode 4. This can prevent short circuiting between the first electrode 3 and the second electrode 4.

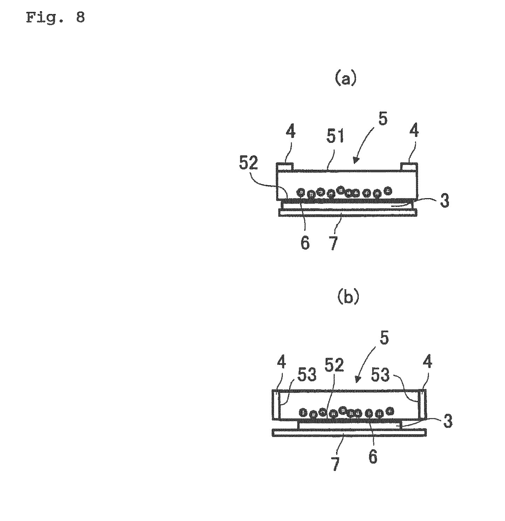

As shown in Fig. 8 (a), in the outside of the cell 5, the first electrode 3 can be provided on the bottom of the cell 5, while the second electrode 4 can be provided on the top of the cell 5. In this case, the ceiling 51 and bottom 52 of the cell 5 are present between the first electrode 3 and the second electrode 4, and this can prevent short circuiting between the first electrode 3 and the second electrode 4.

Moreover, as shown in Fig. 8 (b), in the outside of the cell 5, when the first electrode 3 is provided on the bottom of the cell 5, while the second electrode 4 is provided on the side of the cell 5, the side wall 53 and bottom 52 of the cell 5 are present between the first electrode 3 and the second electrode 4. Accordingly, even when the cell 5 is deformed internally in a radial direction, the occurrence of short circuiting between the first electrode 3 and the second electrode 4 can be prevented. In Fig. 8, the first electrode 3 is provided on the bottom of the cell 5, but may be provided on the top of the cell 5.

### Reference Signs List

- 1:: Electrophoretic display device
- 2:: Display unit
- 3:: First electrode
- 4:: Second electrode
- 5a to 5c:: First to third cells
- 6a to 6c:: First to third charged particles

## Claims

1. An electrophoretic display device comprising:
a plurality of display units each displaying a single pixel;
first electrodes; and
second electrodes;
the display units being arranged in a matrix form and each having at least three-layered cells that contain charged particles;
each of the first electrodes being provided on the upper or lower surface of each cell;
each of the second electrodes being provided on the side edge of each cell; and
the charged particles being colored with different colors for every cell in each display unit.

2. The electrophoretic display device according to claim 1, wherein the charged particles are negatively charged electret particles made of a material containing fluorine.

3. The electrophoretic display device according to claim 2, wherein the charged particles are made of a fluorine-containing compound that is emulsified in a liquid incompatible with the fluorine-containing compound, and that is irradiated with an electron ray or a radial ray

4. The electrophoretic display device according to claim 3, wherein the fluorine-containing compound is redispersed in an electrophoretic medium and then irradiated with an electron ray or a radial ray.

5. The electrophoretic display device according to claim 2, wherein the charged particles are crushed pieces of a fluorine-containing resin sheet irradiated with an electron ray or a radial ray.

6. The electrophoretic display device according to any one of claims 1 to 5, wherein one of the first and second electrodes is provided on the outside of the cell, while the other is provided on the inside of the cell.

7. The electrophoretic display device according to any one of claims 1 to 5, wherein the first and second electrodes are provided on the outside of the cell, and the second electrode is located on the side of the cell.

8. The electrophoretic display device according to any one of claims 1 to 7, wherein the second electrode is provided around the entire side edge of each cell.

9. The electrophoretic display device according to any one of claims 1 to 8, further comprising shield means for shielding the charged particles collected in the second electrode, each of the means covering the upper peripheral edge of each display unit.

10. The electrophoretic display device according to any one of claims 1 to 9, further comprising reflectors for reflecting light passing through the cells, each of the reflectors being provided below each display unit.
